Europäisches Patentamt

European Patent Office

Office européen des brevets

(19)

(11) Veröffentlichungsnummer: **0 274 150 B1**

# EUROPÄISCHE PATENTSCHRIFT

(45) Veröffentlichungstag der Patentschrift: **03.06.92**

(51) Int. Cl.⁵: **H02K 21/46**, H02K 7/108

(21) Anmeldenummer: **87202376.7**

(22) Anmeldetag: **01.12.87**

(54) **Einphasensynchronmotor mit einem zweipoligen, dauermagnetischen Rotor und mit einem Wirbelstrom-Zwischenläufer.**

(30) Priorität: **06.12.86 DE 3641744**

(43) Veröffentlichungstag der Anmeldung:
**13.07.88 Patentblatt  88/28**

(45) Bekanntmachung des Hinweises auf die
Patenterteilung:
**03.06.92 Patentblatt  92/23**

(84) Benannte Vertragsstaaten:
**AT DE ES FR GB IT**

(56) Entgegenhaltungen:
**EP-A- 0 246 410        DE-U- 8 400 013
FR-A- 2 425 751        US-A- 1 982 826
US-A- 3 753 017        US-A- 4 388 545**

(73) Patentinhaber: **Philips Patentverwaltung GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfa-brieken
Groenewoudseweg 1
NL-5621 BA Eindhoven(NL)**

(84) Benannte Vertragsstaaten:
**ES FR GB IT AT**

(72) Erfinder: **Bertram, Leo
Am Sender 10
W-5190 Stolberg(DE)**
Erfinder: **Schemmann, Hugo, Dr.
Zwartebergweg 6
NL-6371 Schaesberg(NL)**

(74) Vertreter: **Kupfermann, Fritz-Joachim,
Dipl.-Ing. et al
Philips Patentverwaltung GmbH Wenden-strasse 35 Postfach 10 51 49
W-2000 Hamburg 1(DE)**

EP 0 274 150 B1

**Beschreibung**

Die Erfindung bezieht sich auf einen Einphasensynchronmotor mit einem zweipoligen, dauermagnetischen Rotor und mit einem Wirbelstrom-Zwischenläufer, der verdrehfest mit der Motorwelle verbunden ist und der zwischen den Ständereisenpolen und dem dauermagnetischen, auf der Motorwelle frei drehbaren Rotor umlauffähig ist.

Ein derartiger Einphasensynchronmotor ist aus der DE-U 84 00 013 bekannt. Der Motor hat einen zylinderförmigen, lamellierten Ständer mit zwei in das Zylinderinnere greifenden Ständerpolen, die mittels Erregerspulen durchflutbar sind.

Innerhalb der Ständerpole sind auf der Motorachse ein dauermagnetischer, zylindrischer Rotor und ein becherförmiger Wirbelstrom-Zwischenläufer aus Kupfer gelagert. Während der Wirbelstrom-Zwischenläufer verdrehfest mit der Motorwelle verbunden ist, ist der dauermagnetische Rotor frei um die Motorwelle drehbar.

Dieser Einphasensynchronmotor wirkt damit gleichzeitig als Einphasen-Induktions- oder Asynchronmotor; er ist vorzugsweise für einen Pumpenantrieb gedacht. Bei diesem Motor läuft beim Anlauf zunächst der dauermagnetische Rotor in den Synchronismus hoch, und die sich in dem Wirbelstrom-Zwischenläufer ausbildenden Wirbelströme führen dazu, daß der Zwischenläufer asynchron hochläuft allerdings viel langsamer als der dauermagnetische Rotor. Der Vorteil dieser Konstruktion besteht u. a. darin, daß das Anzugsmoment wesentlich größer als das des reinen Einphasensynchronmotors ist.

Diese Konstruktion ist aufwendig und führt zu Lagerschwierigkeiten, weil nämlich der Zwischenläuferbecher nur einseitig gelagert ist. Die Herstellung des Zwischenläuferbechers ist aufwendig, und seine Lagerung ist kritisch.

Aus der US-A-37 53 017 ist es bekannt, einen Einphasensynchronmotor mit einer zylindrishen Rotoranordnung zu versehen, die vom Statorfeld axial durchflutbar ist über Statorpole, die sich axial beiderseits der Rotoranordnung befinden. Es handelt sich hierbei jedoch nicht um ein Zwischenläufersystem mit axial hintereinander angeordneten Scheiben, die sich gegeneinander verdrehen können. Die Permanentmagneten sind mit den leitenden Rotorteilen fest verbunden und dienen dem Synchronisieren des asynchron angelaufenen Rotors. Das abgebbare Moment im Synchronismus und das Anlaufmoment sind hierbei beschränkt.

Es ist Aufgabe der Erfindung, einen Motor der eingangs erwähnten Art zu schaffen, der ein hohes Anlaufmoment hat, einfacher aufgebaut ist, damit wirtschaftlicher erstellt werden kann und der weniger toleranzempfindlich ist.

Die gestellte Aufgabe ist erfindungsgemäß dadurch gelöst, daß der Rotor und der Wirbelstrom-Zwischenläufer scheibenförmig ausgebildet sind und beide Scheiben als Scheibenanordnung vom Statorfeld axial durchflutbar sind über Ständereisenpole, die sich axial beiderseits der Scheibenanordnung befinden und daß der Wirbelstrom-Zwischenläufer mit einer Fliehkraftkupplung versehen ist, die auf den dauermagnetischen Rotor, diesen mit dem Zwischenläufer kuppelnd, einwirkt.

Ein derartiger Aufbau ist einfach, läßt sich wirtschaftlich herstellen und ist wenig toleranzempfindlich.

Der belastete Wirbelstrom-Zwischenläufer ist nun in der Lage auf die volle Synchrondrehzahl des dauermagnetischen Rotors hochzulaufen. Mit Hilfe der Fliehkraftkupplung werden der dauermagnetische Rotor und der Wirbelstrom-Zwischenläufer bei zunehmender Geschwindigkeit des Zwischenläufers nämlich zunehmend miteinander gekuppelt, so daß bei schließlich vollständiger Kupplung der dauermagnetisache Rotor den Wirbelstrom-Zwischenläufer vollständig mitnimmt und auf die synchrone Drehzahl bringt. Auf diese Weise sind die vorteilhaften Eigenschaften eines Wirbelstrom-Zwischenläufers gekuppelt mit den vorteilhaften Eigenschaften eines Einphasensynchronmotors.

Nach einer weiteren Ausgestaltung der Erfindung ist vorgesehen, daß die Ständerspulen auf Eisenjochen angeordnet sind, die außerhalb der Scheibenanordnung die Ständereisenpole verbinden, wobei die Ständereisenpole die Lager der Motorwelle tragen. Der gesamte Motor hat damit die Gestalt einer Scheibe und ist dennoch außerordentlich stabil aufgebaut, da es keine einseitigen Belastungen gibt.

An sich ist es aus der US-PS 22 14 850 bekannt, einen dauermagnetischen Rotor frei drehbar auf einer Welle zu lagern, die eine Stahlscheibe trägt. Beide Rotoren befinden sich im Magnetfeld eines Stators, der außer der Hauptspule entsprechend dem Spaltpolprinzip eine weitere Kurzschlußspule trägt. Auf diese Weise erzeugt der Stator ein Magnetfeld mit rotierenden Anteilen. Der Anlauf des Motors erfolgt in der Art, daß die Stahlscheibe mit der Last asynchron hochläuft. Der dauermagnetische Rotor verbessert den Motorwirkungsgrad nach dem Hochlaufen und anschließendem Kuppeln mit der Stahlscheibe. Bei der US-PS handelt es sich nicht um einen Aufbau mit Zwischenläufer, sondern um zwei parallel arbeitende Motoren mit unterschiedlichem Arbeitsprinzip und gemeinsamem Stator. Stahlscheibe und dauermagnetischer Rotor liegen in parallelen Ebenen nebeneinander und parallel zum Statormagnetfeld.

In weiterer Ausgestaltung der Erfindung ist vorgesehen, daß die Fliehkraftkupplung aus federbelasteten Fliehgewichten besteht, die in radialen Führungskäfigen verschieblich und in Richtung auf eine Kupplungsfläche des Rotors federbelastet angeordnet sind. Die Fliehgewichte und Führungskäfige können in Anspritzteilen vorgesehen sein, die an den dauermagnetischen Rotor und an den Wirbelstrom-Zwischenläufer angespritzt sind. In vorteilhafter Ausgestaltung der Erfindung ist dabei vorgesehen, daß am Rotor ein nicht-metallischer Außenkragen vorgesehen ist, der rings um die Rotormantelfläche eine Ringnut ausbildet, in die ein nicht-metallischer Innenkragen der Zwischenläuferscheibe eingreift, der die Führungskäfige für die nach außen federbelasteten Fliehgewichte aufweist.

Die Erfindung wird anhand der Zeichnung näher erläutert. Es zeigen:

Fig. 1 einen Einphasensynchronmotor mit Wirbelstom-Zwischenläufer und

Fig. 2 eine vergrößerte Darstellung der Fliehkraftkupplung zwischen dem dauermagnetischen Rotor und dem Zwischenläufer,

Fig. 3 den Motor nach Fig. 1 im Schnitt längs der Linie III-III nach Fig. 1 zur Erläuterung der gegenseitigen Beziehungen von Stator und Rotor.

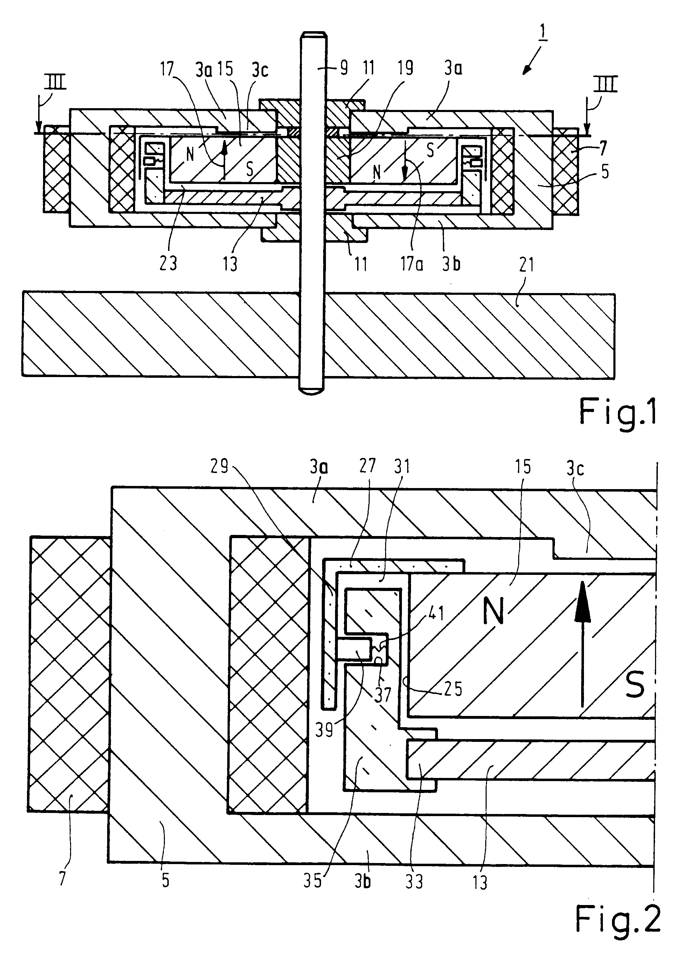

Fig. 1 zeigt einen Einphasensynchronmotor 1, der als Zwischenläufermotor ausgebildet ist. Der Einphasensynchronmotor 1 hat zwei streifenförmige, im Abstand voneinander angeordnete Weicheisenpole 3a, 3b mit asymmetrischen Vorsprüngen 3c, die an voneinander abliegenden Seiten über Eisenjoche 5 verbunden sind. Die asymmetrischen Vorsprünge 3c dienen dazu, den dauermagnetischen Rotor in eine derartige Ruhestellung zu drehen, in welcher das von den Erregerspulen ausgeübte Moment auf den Rotor nicht 0 ist. Eine andere Möglichkeit, diese Verdrehung zu erreichen, besteht darin, die Eisenschenkel 3a mit unsymmetrischen Aussparungen zu versehen. Über diese Eisenjoche 5 sind Erregerspulen 7 gewickelt. Der Einphasensynchronmotor hat eine Motorwelle 9, die in den Eisenpolen 3 mittels Lagern 11 drehbar gelagert ist. Verdrehfest auf der Motorwelle 9 ist eine Kupferscheibe 13 angeordnet, die als Wirbelstrom-Zwischenläufer dient. Achsparallel neben der Kupferscheibe 13 befindet sich eine dauermagnetische Rotorscheibe 15, die in axialer Richtung (durch Pfeile 17 angedeutet) magnetisiert ist und die über ein Lager 19 frei um die Motorwelle 9 drehbar gelagert ist. Auf der Motorwelle 9 ist eine Last 21 angedeutet.

Es sei noch einmal hervorgehoben, daß die als Wirbelstromläufer eingesetzte Kupferscheibe 13 unmittelbar neben der zweipoligen, dauermagnetischen Rotorscheibe 15 angeordnet ist und beide zusammen eine drehbare Scheibenanordnung 23 bilden, die dem Antreiben der Last 21 dient.

Beim Erregen der Spulen 7 werden die Zwischenläuferscheibe 13 und die Rotorscheibe 15 in axialer Richtung durchflutet, wobei die Durchflutung der beiden Motorhälften in entgegengesetzten Richtungen verläuft, wie sich aus den Pfeilen 17 und 17a ergibt. Infolge dieser Durchflutung läuft der Rotor 15 in seine synchrone Drehzahl hoch. In der Zwiscnenläuferscheibe 13 bilden sich Wirbelströme aus. Die mit der Last 21 belastete Zwischenläuferscheibe 13 dreht damit langsam hoch und erreicht abhängig von der Last eine Drehzahl, die unterhalb der Synchrondrehzahl liegt.

Es ist dabei selbstverständlich zu beachten, daß die Statorpole, wie bekannt, asymmetrisch ausgebildet sind.

Wird beabsichtigt oder gewünscht, daß die Last 21 bis zur Synchrondrehzahl der Rotorscheibe 15 hochläuft, dann wird eine Fliehkraftkupplung eingesetzt. Diese Fliehkraftkupplung, die in Fig. 1 nur angedeutet ist, ist in Fig. 2 vergrößert für eine Motorhälfte dargestellt. Die Mantelfläche 25 der Rotorscheibe 15 ist mit einem angespritzten Kragen 27 versehen, der einen Außenzylinder 29 aufweist, zwischen dem und der Mantelfläche 25 sich eine Nut 31 ausbildet. Der angespritzte Kragen 27 besteht vorzugsweise aus einem nicht-metallischen Material, wie Kunststoff. An den äußeren Rand 33 der Zwischenläuferscheibe 13 ist ebenfalls ein Kragen 35, beispielsweise aus Kunststoff, angespritzt, der in die Nut 31 frei eingreift. Dieser Kragen 35 ist mit Führungskäfigen 37 versehen, die in radialer Richtung verlaufen. In den Führungskäfigen sind Fliehgewichte 39 radial verschiebbar geführt. Federn 41 sind bestrebt, die Fliehgewichte 39 aus den Führungskäfigen 37 heraus gegen die Außenzylinder 29 zu drücken.

Die Federn 41 drücken die Fliehgewichte 39 ständig gegen den Außenzylinder 29 der Rotorscheibe 15. Der Andruck ist aber so minimal, daß eine spürbare Bremswirkung auf die Rotorscheibe 15 nicht feststellbar ist. Läuft die Zwischenläuferscheibe 13 hoch, dann verstärkt sich die Kraft der Fliehgewichte 39 auf den Außenzylinder 29 der Rotorscheibe 15. Die Reibwirkung zwischen der Rotorscheibe 15 und der Zwischenläuferscheibe 13 nimmt damit zu. Allmählich wird deshalb die Zwischenläuferscheibe 13 zusätzlich zu der Wirbelstromwirkung von dem Dauermagnet-Rotor 15 mitgenommen. Dreht die Zwischenläuferscheibe 13 schnell genug und ist die Wirkung der Fliehkraft auf die Fliehgewichte 39 groß genug, dann kommt eine vollständige starre Kupplung zwischen der Zwischenläuferscheibe 13 und der Dauermagnetscheibe 15 zustande, was zur Folge hat, daß die Zwischenläuferscheibe 13 bis auf die Synchrondrehzahl hoch beschleunigt wird.

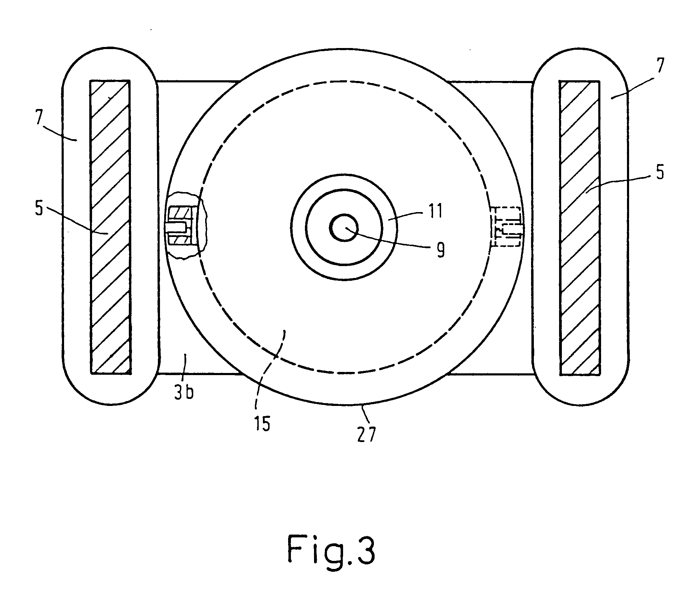

Bei der Schnittdarstellung nach Fig. 3 sind die in Fig. 1 obenliegenden Eisenschenkel 3c entfernt, um in den Motor hineinsehen zu können. Zwischen den Eisenjochen 5 mit den aufgeschobenen Erregerspulen 7 befinden sich übereinander der dauermagnetische Rotor 15 und die vom Rotor 15 abgedeckte Zwischenläuferscheibe 13. Über das Lager 19 ist der dauermagnetische Rotor frei drehbar auf der Welle 9 gelagert.

## Patentansprüche

1. Einphasensynchronmotor mit einem zweipoligen, dauermagnetischen Rotor (15) und mit einem Wirbelstrom-Zwischenläufer (13), der verdrehfest mit der Motorwelle (9) verbunden ist und der zwichen den Ständerpolen (3a, 3b) und dem dauermagnetischen, auf der Motorwelle (9) drehbaren Rotor (15) umlauffähig ist, dadurch gekennzeichnet, daß der Rotor (15) und der Wirbelstrom-Zwischenläufer (13) scheibenförmig ausgebildet sind und beide Scheiben als Scheibenanordnung (23) vom Statorfeld axial durchflutbar sind über Ständereisenpole (3), die sich axial beiderseits der Scheibenanordnung (23) befinden, und daß der Wirbelstrom-Zwischenläufer (13) mit einer Fliehkraftkupplung (27 bis 41) versehen ist, die auf den dauermagnetischen Rotor (15), diesen mit dem Zwischenläufer (13) kuppelnd, einwirkt.

2. Einphasensynchronmotor nach Anspruch 1, dadurch gekennzeichnet, daß die Ständerspulen (7) auf Eisenjoche (5) aufgeschoben sind, die axial außerhalb der Scheibenanordnung (23) die Ständereisenpole (3a, 3b) verbinden.

3. Einphasensynchronmotor nach den Ansprüchen 1 und/oder 2, dadurch gekennzeichnet, daß die Ständereisenpole (3) die Lager (11) der Motorwelle (9) tragen.

4. Einphasensynchronmotor nach Anspruch 1, dadurch gekennzeichnet, daß die Fliehkraftkupplung (27 bis 41) aus federbelasteten Fliehgewichten (39) besteht, die in radialen Führungskäfigen (37) verschieblich und in Richtung auf eine Kupplungsfläche (29) des Rotors (15) federbelastet angeordnet sind.

5. Einphasensynchronmotor nach Anspruch 4, dadurch gekennzeichnet, daß am Rotor (15) ein nicht-metallischer Außenkragen (27, 29) vorgesehen ist, der rings um die Rotormantelfläche (25) eine Ringnut (31) ausbildet, in die ein nicht-metallischer Innenkragen (35) der Zwischenläuferscheibe (13) eingreift, der die Führungskäfige (37) für die nach außen federbelasteten Fliehgewichte (39) aufweist.

## Claims

1. A single-phase synchronous motor comprising a two-pole permanent-magnet rotor (15) and an eddy-current intermediate rotor (13), which is rotationally locked to the motor shaft (9) and which is arranged to be rotatable between the stator poles (3a, 3b) and the permanent-magnet rotor (15), which is mounted for free rotation on the motor shaft (9), characterized in that the rotor (15) and the eddy-current intermediate rotor (13) are disc-shaped and both discs form a disc assembly (23) which can be magnetized axially by the stator field *via* stator-iron poles (3) which are situated at axially opposite sides of the disc assembly (23), and the eddy-current intermediate rotor (13) is provided with a centrifugal coupling (27 to 41) which acts upon the permanent-magnet rotor (15) to couple it to the intermediate rotor (13).

2. A single-phase synchronous motor as claimed in Claim 1, characterized in that the stator coils (7) are arranged on iron yokes (5) which axially interconnect the stator-iron poles (3) externally of the disc assembly (23).

3. A single-phase synchronous motor as claimed in Claim 1 and/or 2, characterized in that the stator-iron poles (3) carry the bearings (11) of the motor shaft (3).

4. A single-phase synchronous motor as claimed in Claim 1, characterized in that the centrifugal coupling (27 to 41) comprises spring-loaded centrifugal weights (39) arranged to be slidable in radial guides (37) and springloaded towards a coupling surface (29) of the rotor (15).

5. A single-phase synchronous motor as claimed in Claim 4, characterized in that the rotor (15) is provided with a non-metallic outer flange (27,29) surrounding the rotor periphery (25) to form an annular space (31), which is engaged by a non-metallic inner flange (35) arranged on the intermediate rotor disc (13) and formed with the guides (37) for the outwardly spring-loaded centrifugal weights (39).

## Revendications

1. Moteur synchrone monophasé muni d'un rotor bipolaire à aimantation permanente (15) et d'un rotor intermédiaire à courant de Foucault (13) solidarisé avec l'arbre (9) du moteur et pouvant tourner entre les pôles (3a,3b) du fer statorique et le rotor (15) monté libre en rotation sur l'arbre (9) du moteur, caractérisé en ce que le rotor (15) et le rotor intermédiaire à courant de Foucault (13) sont réalisés sous la forme d'un disque, les deux disques formant un ensemble (23) qui peut être aimanté axialement par le champ statorique par l'intermédiaire de pôles statoriques (3) qui, vus dans le sens axial, sont situés de part et d'autre de l'ensemble de disques (23) et en ce que le rotor intermédiaire à courant de Foucault (13) est muni d'un accouplement centrifuge (27 à 41) agissant sur le rotor à aimantation permanente (15) de façon à coupler celui-ci au rotor intermédiaire (13).

2. Moteur synchrone monophasé selon la revendication 1, caractérisé en ce les bobines statoriques (7) sont disposées sur des culasses de fer (5) qui, dans le sens axial, relient les pôles (3a, 3b) du fer statorique à l'extérieur de l'ensemble de disques (23).

3. Moteur synchrone monophasé selon les revendications 1 et/ou 2, caractérisé en ce que les pôles (3) du fer statorique supportent le palier (11) de l'arbre de moteur (9).

4. Moteur synchrone monophasé selon la revendication 1, caractérisé en ce que l'accouplement centrifuge (27 à 41) est constitué par des masselottes (39) à ressort, masselottes qui sont disposées à coulissement dans des gorges de guidage radiales (37) tout en étant chargées par des ressorts en direction d'une surface de couplage (29) du rotor (15).

5. Moteur synchrone monophasé selon la revendication 4, caractérisé en ce que le rotor (15) est pourvu d'un collet extérieur non métallique (27,29) entourant la surface latérale du rotor de façon à laisser un espace annulaire (31) dans lequel pénètre un collet intérieur non métallique (35) du disque de rotor intermédiaire (13), collet intérieur qui présente les gorges de guidage (37) pour les masselottes (39) chargées par des ressorts vers l'extérieur.

Fig.1

Fig.2

Fig.3